# EUROPÄISCHE PATENTSCHRIFT

(11) **EP 4 506 587 B1**
(45) Veröffentlichungstag und Bekanntmachung des Hinweises auf die Patenterteilung: **25.02.2026**
(21) Anmeldenummer: 23190941.7
(22) Anmeldetag: 10.08.2023
(51) Int. Cl.: F16F 9/16, F16F 9/26, F16F 9/32, F16F 9/30, F16F 9/18, F16F 9/34, F16F 9/48, F16F 9/20

(54) **STOSSDÄMPFER**
SHOCK ABSORBER
AMORTISSEUR DE CHOCS

(43) Veröffentlichungstag der Anmeldung: 12.02.2025
(73) Patentinhaber: Driveman GmbH, 58339 Breckerfeld (DE)
(72) Erfinder: Schnippering, Axel, 58339 Breckerfeld (DE); Wiegand, Andreas, 58579 Schalksmühle (DE)
(74) Vertreter: Patentanwälte Dörner & Kötter PartG mbB

(56) Entgegenhaltungen:
- EP-B1- 3 458 739
- DE-U1- 202023 102 485
- FR-A1- 2 258 567
- US-A- 5 376 135
- US-B2- 6 505 719

## Beschreibung

Die Erfindung betrifft einen Stoßdämpfer, insbesondere für Radfahrzeuge, nach dem Oberbegriff des Patentanspruchs 1.

Stoßdämpfer kommen beispielsweise bei Fahrwerken von Radfahrzeugen im Verbund mit einer Federung zum Einsatz, um Schwingungen der gefederten Masse zu dämpfen und dadurch schnell abklingen zu lassen. Korrekter wäre die Bezeichnung "Schwingungsdämpfer", da nicht der Stoß selbst, sondern dessen Wirkung beeinflusst wird. Stoßdämpfer dienen nicht dem Abfangen von von Fahrbahnunebenheiten ins Fahrzeug eingeleiteten Stößen; die Aufgabe kommt der Federung zu. Stoßdämpfer haben die Aufgabe, Schwingungen des Fahrzeugaufbaus auf die Tragfederung sowie auch Schwingungen der Räder auf die Reifenfederung zu dämpfen. Stoßdämpfern werden darüber hinaus in den unterschiedlichsten Bereichen eingesetzt, beispielsweise auch zur Schwingungsdämpfung von Maschinen oder Maschinenteilen, aber auch beispielweise im Möbelbau zum Dämpfen von Klappenbewegungen.

Bei Fahrzeugen liegt die primäre Aufgabe einer Feder innerhalb der Federung darin, der Masse des Fahrzeugaufbaus und des Fahrers entgegenzuwirken. Bei Zweiradfahrzeugen kommen regelmäßig Spiralfedern zum Einsatz. Die Federkraft einer Spiralfeder weist im Regelfall einen linearen Verlauf zum eingefederten Weg auf. Sie befindet sich zu Beginn einer Belastung in einem Ruhezustand und trägt das Gewicht von Fahrzeug und Fahrer. Eine niedrige Federkonstante (Federrate) sorgt für ein komfortables Fahrgefühl. Während des Federweges erhöht sich die Federkraft. Eine niedrige und komfortable Federkonstante ermöglicht aber ein schnelles und einfaches Durchschlagen. Eine hohe Federkonstante hingegen verringert das Durchschlagen, verschlechtert aber den Fahrkomfort. Leichte bis mittlere Stöße durch Straßenunebenheiten werden durch eine höhere Federkonstante weniger absorbiert, und über das Fahrzeug an den Fahrer durchgeleitet. Der Negativfederweg (Zugstufe), ergibt sich durch die Auflastung von Fahrer und Fahrzeug. Eine weitere Einfederung (Druckstufe) erfolgt durch die Einwirkungen der Fahrbahnunebenheiten. Über die Einstellung der Vorspannung der Spiralfeder kann das Fahrergewicht angepasst werden.

Durch eine Auslegung eines Stoßdämpfers in Zugrichtung und in Druckrichtung kann die Fahrdynamik und damit der Fahrkomfort beeinflusst werden. Innerhalb der Zugstufe eines Stoßdämpfers wird eine Fahrzeugfederung in dem Entspannungsvorgang innerhalb einer Schwingung gedämpft. In der Druckstufe erfolgt eine Dämpfung der Einfedergeschwindigkeit.

Stoßdämpfer sind im Fahrzeugbereich regelmäßig hydraulische Teleskopstoßdämpfer. Diese beruhen auf dem Prinzip, dass die Widerstandskraft gegen das Fließen des verdrängten Öls von der Fließgeschwindigkeit abhängt. In dem Stoßdämpfer wird Hydrauliköl über einen Kolben durch enge Bohrungen und Ventilsysteme gepresst. Die Dämpfungskraft, die der Dämpfergeschwindigkeit entgegenwirkt, steigt mit zunehmender Ein- bzw. Ausfedergeschwindigkeit des Kolbens progressiv an.

Nachteilig an den vorbekannten hydraulischen Stoßdämpfern (die, wie oben ausgeführt tatsächlich Schwingungsdämpfer sind) ist, dass diese in einer Feder-Dämpfer-Anordnung die Stoßdämpfungswirkung der Feder in ihrem freischwingenden Mittelbereich durch ihre Schwingungsdämpfung beeinträchtigen. Dabei ist die Beeinträchtigung abhängig von der Geschwindigkeit des Kolbens.

Zur Behebung dieser Problematik wird in der DE 20 2023 102 485 U1 ein Stoßdämpfer vorgestellt, bei dem eine Beeinträchtigung der Stoßdämpfungswirkung einer angeordneten Federung in ihrem freischwingenden Mittelbereich vermieden ist. Hierzu ist in einem Zylinder eine Kolbenstange angeordnet, die durch diesen hindurchgeführt ist und die mit zwei beabstandet zueinander angeordneten Kolben versehen ist, in die umlaufend radial beabstandet zu der Kolbenstange Axialbohrungen eingebracht sind. An der jeweiligen Außenseite der Kolben ist jeweils eine Verschlussscheibe zum Verschließen der Axialbohrungen des zugeordneten Kolbens auf der Kolbenstange axial beweglich gelagert. Die Zylinderinnenwand weist zumindest bereichsweise einen sich in Axialrichtung stetig ändernden Durchmesser auf, wodurch eine wegabhängige Dämpfung bewirkt ist, über die eine Minimierung der Schwingungsdämpfung im freischwingenden Mittelbereich einer Federung ermöglicht ist. Dieser Stoßdämpfer hat sich in der Praxis bewährt und ermöglicht erstmals eine wegabhängige Dämpfung mit einer weitgehend ungedämpften Nulllage.

Beim Einsatz eines solchen Stoßdämpfers hat sich jedoch gezeigt, dass bei hoher Belastung des Stoßdämpfers Änderungen des Dämpfungsverhaltens auftreten können. Weitere Ausführungen von Schwingungsdämpfern sind in der EP 3 458 739 B1 und der US 5,376,135 beschrieben.

Hier will die Erfindung Abhilfe schaffen. Der Erfindung liegt die Aufgabe zu Grunde einen Stoßdämpfer der vorstehenden Art bereitzustellen, bei dem auch bei hoher Belastung ein im Wesentlichen gleichbleibendes Dämpfungsverhalten vorliegt. Gemäß der Erfindung wird diese Aufgabe durch einen Stoßdämpfer mit den Merkmalen des kennzeichnenden Teils des Patentanspruchs 1 gelöst.

Überraschend hat sich gezeigt, dass durch eine hohe Belastung ein Anstieg der Fluidtemperatur innerhalbe des Zylinders bewirkt ist, wodurch sich aufgrund der Inkompressibilität des Fluids, vorliegend ein Hydrauliköl, ein Druckanstieg innerhalb des Zylinders ergibt, der ursächlich für die Änderung des Dämpfungsverhaltens ist. Dadurch, dass in dem Zylinder wenigstens ein Druckausgleichselement angeordnet ist, das ein druckabhängiges variables Volumen aufweist und das mit dem Fluid in Kontakt ist, ist einem Druckanstieg innerhalb des Zylinders im Falle eines Temperaturanstiegs des Fluids, insbesondere eines Hydrauliköls, entgegengewirkt. Bei einem Druckanstieg wird das Druckausgleichselement komprimiert, wodurch innerhalb des Zylinders zusätzliches Volumen freigegeben wird, was zu einem Druckausgleich führt. Durch das Druckausgleichselement wird auf diese Weise der Druck in dem Zylinder konstant gehalten.

Das wenigstens eine Druckausgleichselement ist aus Elastomerschaum, Moosgummi oder Zellkautschuk hergestellt. Diese Materialien weisen Hohlräume auf, die bei äußerer Druckeinwirkung zusammengedrückt werden, wodurch das Volumen des Druckausgleichselements vermindert wird.

In Ausgestaltung der Erfindung ist ein Druckausgleichselement zwischen den beiden Kolben die Kolbenstange zumindest bereichsweise umgebend angeordnet. Hierdurch ist ein alternatives oder auch zusätzliches Druckausgleichsvolumen bereitgestellt.

In weiterer Ausgestaltung der Erfindung sind zwischen den Kolben zumindest zwei beabstandet zueinander angeordnete radiale auskragende Stützelemente vorhanden, zwischen denen wenigstens ein Druckausgleichselement gehalten ist. Durch die Stützelemente ist das Druckausgleichselement in Position gehalten, wodurch das Hydraulikfluid im Arbeitsbetrieb ungehindert fließen kann.

Die Zylinderinnenwand ist durch die Innenmantelfläche wenigstens einer in den Zylinder eingebrachten Dämpferhülse gebildet, deren Außendurchmesser geringer ist, als der Innendurchmesser des Zylinders, wobei in dem zwischen dem Zylinder und der wenigstens einen Dämpferhülse gebildeten Mantelspalt wenigstens ein Druckausgleichselement angeordnet ist und wobei der Mantelspalt über wenigstens eine Durchlassöffnung mit dem Fluid beaufschlagbar ist. Hierdurch ist ein entlang der Zylinderwand verlaufendes Druckausgleichsvolumen bei steigenden Fluiddruck bereitgestellt. Das Druckausgleichselement wird über durch die Durchlassöffnung einströmendes einen Überdruck aufweisendes Hydraulikfluid komprimiert, wodurch der Überdruck kompensiert wird.

In Ausgestaltung der Erfindung ist der Zylinder an einem Ende geschlossen ausgebildet, wobei die Kolbenstange an dem anderen Ende aus diesem herausragt und wobei zwischen den beiden Kolben eine Kolbenführung angeordnet ist, die wenigstens eine Druckausgleichsöffnung aufweist. Hierdurch ist eine bauraumreduzierte Dämpfergestaltung ermöglicht. Durch die Kolbenführung ist eine Linearführung des Doppelkolbens und der Kolbenstange gewährleistet. Gleichzeitig kann durch die wenigstens eine Druckausgleichsöffnung ein Druckausgleich zwischen den beiden Kolben erfolgen.

In weiterer Ausgestaltung der Erfindung ist in dem Zylinder jeweils auf einer Seite der Kolbenführung wenigstens eine die Zylinderinnenwand ausbildende Dämpferhülse angeordnet, durch die jeweils ein Mantelspalt gebildet ist, in dem ein Druckausgleichselement angeordnet ist. Hierdurch ist auf beiden Seiten ein druckabhängiges variables Volumen zum Druckausgleich angeordnet. Bevorzugt sind die beiden durch die beiden Dämpferhülsen gebildeten Mantelspalte unterschiedlich breit ausgebildet, wobei bevorzugt der dem geschlossenen Ende des Zylinders zugewandte zweite Spalt breiter ausgebildet ist, als der dem offenen Ende des Zylinders zugewandte erste Spalt.

In Ausgestaltung der Erfindung entspricht die Größe des Druckausgleichselements im Wesentlichen der Größe des Spaltes. Hierdurch ist ein maximales druckabhängig variables Volumen erzielt.

In weiterer Ausgestaltung der Erfindung ist wenigstens eine Dämpferhülse aus zwei hintereinander angeordneten Dämpferteilhülsen gebildet, die eine zueinander unterschiedliche Innenkontur aufweisen. Hierdurch ist ein Aufbau der Dämpferhülse aus verschiedenen Dämpferteilhülsen gebildet, der unterschiedlichste Konfigurationen der Innenkontur der Dämpferhülse ermöglicht.

In Weiterbildung der Erfindung ist die Kolbenstange mehrteilig ausgebildet. Hierdurch ist eine vereinfachte Montage erzielt.

In Ausgestaltung der Erfindung weist die Zylinderinnenwand in einem ersten Bereich einen in Axialrichtung sich konisch erweiternden und in einem sich anschließenden zweiten Bereich einen sich konisch verjüngenden Bereich auf. Hierdurch ist ein wegabhängiges Dämpfungsverhalten erzielt. Bevorzugt weisen beiden Kolben auf ihrer der jeweiligen Verschlussscheibe zugewandten Außenseite einen axial sich konisch verjüngenden Abschnitt auf.

In weiterer Ausgestaltung der Erfindung ist Dämpferhülse aus Kunststoff, vorzugsweise aus einem thermoplastischen Kunststoff, insbesondere aus Polycarbonat oder Polyamid hergestellt. Hierdurch ist eine kostengünstige Fertigung, insbesondere in einem Spritzgießverfahren ermöglicht.

Der Einsatzbereich des erfindungsgemäßen Stoßdämpfers ist nicht auf Fahrzeuge und insbesondere auch nicht auf Zweiradfahrzeuge beschränkt. Vielmehr ergeben sich auch andere Einsatzfelder wie beispielsweise im Bereich der Schwingungsdämpfung von Maschinen oder auch im Möbelbau. Auch ein Einsatz im Bereich des Bauwesens, beispielsweise für hohe Bauwerke oder auch erdbebensichere Gebäude ist denkbar.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Es zeigen:
- Figur 1:: die schematische Darstellung eines Stoßdämpfers a) in einer Seitenansicht; b) in einer transparenten Darstellung; c) im Längsschnitt;

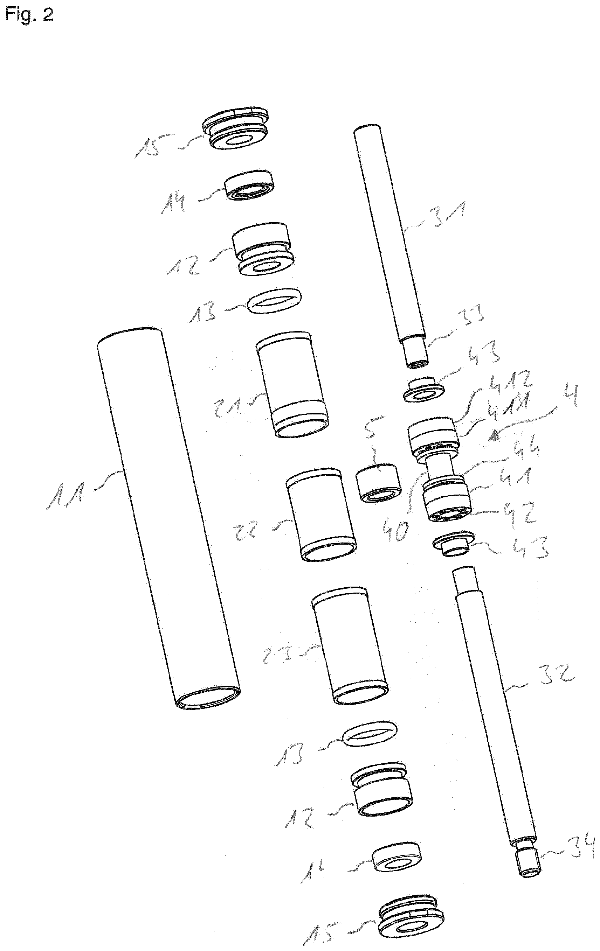

- Figur 2:: die Darstellung des Stoßdämpfers aus Figur 1 in Explosionsdarstellung;
- Figur 3:: die schematische Darstellung eines Stoßdämpfers in einer zweiten Ausführungsform a) in einer Seitenansicht; b) in einer transparenten Darstellung; c) im Längsschnitt;
- Figur 4:: die schematische Darstellung eines Stoßdämpfers in einer dritten Ausführungsform a) in einer Seitenansicht; b) in einer transparenten Darstellung; c) im Längsschnitt;
- Figur 5:: die schematische Darstellung einer modular zusammengesetzten Dämpferhülse zum Einsatz in den Zylinder eines Stoßdämpfers und
- Figur 6:: die Darstellung der Charakteristik der Dämpferleistung eines Stoßdämpfers innerhalb eines Druck-Zug-Zyklus bei erhöhter Fluidtemperatur mit und ohne Druckausgleichselement.

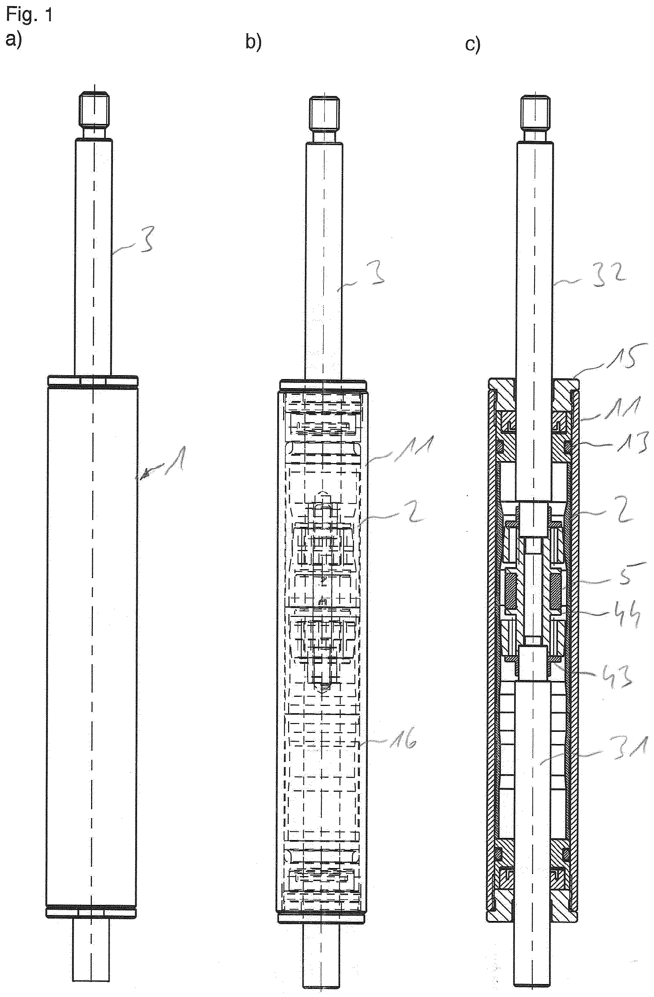

Der als Ausführungsbeispiel gemäß Figur 1 gewählte Stoßdämpfer umfasst einen mit einem Fluid, vorliegend Hydrauliköl gefüllten Zylinder 1, in den eine Dämpferhülse 2 eingebracht ist, durch die eine Kolbenstange 3 verschiebbar geführt ist. Auf der Kolbenstange 3 ist ein Kolbenmodul 4 angeordnet, dass aus zwei über ein Distanzstück 40 miteinander verbundenen Kolben 41 gebildet ist, die mit Axialbohrungen 42 versehen sind und an deren jeweils nach außen gerichteter Seite eine Verschlussscheibe 43 auf der Kolbenstange 3 axial verschiebbar gelagert ist. Zwischen den beiden Kolben 41 sind auf dem Distanzstück 40 beabstandet zueinander zwei Stützscheiben 44 angeordnet, zwischen denen ein Druckausgleichselement 5 gehalten ist. Im Ausführungsbeispiel ist das Druckausgleichselement 5 hohlzylindrisch ausgebildet und aus Moosgummi hergestellt.

Der Zylinder 1 umfasst ein Zylinderrohr 11, das an beiden Enden jeweils mit einem Dichtungs- und Führungspaket 12 verschlossen ist, das über einen O-Ring 13 gegenüber dem Zylinderrohr 11 abgedichtet ist, und das über einen hydraulischen Dichtring 14 gegenüber der radialen und axialen beweglichen Kolbenstange 3 abgedichtet ist. Die Dichtungs- und Führungspakete 12 sind jeweils über ein Verschlussstück 15 axial in dem Zylinderrohr 11 fixiert. Zwischen den beidseitig angeordneten Dichtungs- und Führungspaketen 12 ist die Dämpferhülse 2 in dem Zylinderrohr 11 axial gehalten.

Die Dämpferhülse 2 ist im Ausführungsbeispiel aus drei Dämpferhülsenteilen 21, 22, 23 zusammengesetzt, die aus einem thermoplastischen Kunststoff, vorliegend Polyamid hergestellt sind und deren einzelne Innenkonturen sich zu der effektiven Innenkontur der Dämpferhülse 2 ergänzen. Durch die Innenkontur der Dämpferhülse 2 ist das Dämpfungsverhalten des Stoßdämpfers einstellbar.

Der Außendurchmesser der Dämpferhülse 2 ist etwa 2 Prozent geringer gegenüber dem Innendurchmesser des Zylinderrohres 11, wodurch zwischen dem Zylinderrohr 11 und der Dämpferhülse 2 ein Mantelspalt 16 gebildet ist. Die Dämpferhülse 2 ist so axial fixiert schwimmend in dem Zylinderrohr 11 gehalten.

Die Kolbenstange 3 umfasst zwei Kolbenstangenstücke 31, 32, die mit dem Kolbenmodul 4 verschraubt sind. Hierzu weist das Kolbenmodul 4 im Ausführungsbeispiel an beiden Enden axiale Gewindesackbohrung auf, in die jeweils ein Kolbenstangenstück 31, 32 mit einem endseitig hierfür vorgesehenen Außengewinde eingeschraubt ist. Alternativ kann auch eine Gewindestange angeordnet sein, die durch eine in dem Kolbenmodul 4 vorgesehene axiale Durchbohrung geführt ist und mit der die beiden Kolbenstangenstücke 31, 32 verschraubt sind. Die beiden Kolbenstangenstücke 31, 32 weisen weiterhin an ihrer dem Kolbenmodul 4 zugewandten Seite einen durchmesserreduzierten Absatz 33 auf, der sich bis zu dem jeweiligen Kolben 41 erstreckt und auf dem jeweils eine Verschlussscheibe 43 axial verschieblich gelagert ist.

Das zweite Kolbenstangenstück 32 weist an seinem dem Kolbenmodul 4 gegenüberliegenden Ende weiterhin einen Verbindungszapfen 34 zum Anschluss an eine Verbindungsstange eines Federmoduls zur Bildung eines Feder-Dämpfersystems auf.

Das Kolbenmodul 4 besteht aus zwei Kolben 41 die über ein zylindrisches Distanzstück 40 beabstandet zueinander miteinander verbunden sind. Die Kolben 41 sind im Wesentlichen identisch ausgebildet und weisen einen zylindrischen Abschnitt 411 auf, an den sich ein konisch sich verjüngender Abschnitt 412 anschließt. Die Kolben 41sind um 180 Grad verschwenkt zueinander gegenüberliegend angeordnet, sodass der sich verjüngende Abschnitt 412 jeweils nach außen gerichtet ist. In die Kolben 41 sind jeweils radial beabstandet zu dem Distanzstück 40 umlaufend regelmäßig beabstandet zueinander Axialbohrungen 42 eingebracht.

Auf dem Distanzstück 40 sind beabstandet zueinander zwei Stützscheiben 44 angeordnet, deren Außendurchmesser kleiner ist, als der Außendurchmesser der Kolben 41. Zwischen den Stützscheiben 44 ist ein Druckausgleichselement 5 gehalten. Im Ausführungsbeispiel ist das Druckausgleichselement 5 hohlzylindrisch ausgebildet und aus Moosgummi hergestellt. Der Außendurchmesser des Druckausgleichselements 5 entspricht im Wesentlichen dem Außendurchmesser der Stützscheiben 44.

Bei Bewegung der Kolbenstange 3 in Zugrichtung (Zugbelastung) wird das in dem Zylinder 1 befindliche Fluid durch den in Bewegungsrichtung vorderen ersten Kolben 41 komprimiert. Hierdurch wird die vor dem ersten Kolben 41 angeordnete Verschlussscheibe 43 gegen den ersten Kolben 41 gepresst, wodurch die in dem ersten Kolben 41 befindlichen Axialbohrungen 42 verschlossen werden. Das Fluid wird durch den zwischen dem zylindrischen Abschnitt 411 des ersten Kolbens 41 und der Innenwand der Dämpferhülse 2 gebildeten Ringspalt hindurchgepresst. Durch den axial sich in Richtung Verschlussscheibe 43 verjüngten konischen Abschnitt 412 ist das Einfließen des Fluids in den Ringspalt unterstützt. Durch den sich in Axialrichtung ändernden Innendurchmesser der Dämpferhülse 2 ist eine sich über den Weg ändernde Breite des zwischen dem ersten Kolben 41 und der Innenwand der Dämpferhülse 2 gebildeten Ringspalts erzielt, wodurch eine sich über den Weg veränderliche Dämpfung bewirkt ist. Das Fluid kann anschließend ungehindert durch die Axialbohrungen 42 des zweiten Kolbens 41 hindurchfließen, wobei die diesem zugeordnete Verschlussscheibe 43 durch das Fluid von diesem zweiten Kolben 41 weggedrängt wird. Der zweite Kolben 41 ist hier im Bereich des maximalen Innendurchmessers der durch die drei Dämpferhülsenteile 21, 22, 23 zusammengesetzten Dämpferhülse 2 positioniert, sodass der zwischen dem zweiten Kolben 41 und der Innenwand der Dämpferhülse 2 gebildete Ringspalt eine maximale Breite aufweist, durch den das Fluid hindurchfließen kann. Durch die Innenkontur der Dämpferhülse 2 ist die Dämpfungswirkung des Stoßdämpfers über den Weg bestimmt.

Bei Bewegung der Kolbenstange 3 in Druckrichtung ist der vorstehende Ablauf umgekehrt, wobei das in dem Zylinder 1 befindliche Fluid nun wiederum durch den in Bewegungsrichtung vorderen Kolben 41 komprimiert und durch den zwischen dem zylindrischen Abschnitt 411 dieses Kolbens 41 und der Innenwand der Dämpferhülse 2 gebildeten Ringspalt hindurchgepresst wird.

Bei zunehmender Belastung des Stoßdämpfers 1 durch Schwingungen der mit dem Kolbenmodul 4 versehenen Kolbenstange 3 kommt es zu einer Erwärmung des in dem Zylinder 1 befindlichen Fluids, wodurch sich dieses ausdehnt. Bedingt durch diese Ausdehnung kommt es zu einem Anstieg des Fluiddrucks, vorliegend einem Hydrauliköl. Durch den steigenden Druck des Hydrauliköls, das auch an dem Druckausgleichselement 5 anliegt, wird dieses komprimiert. Hierdurch wird das effektive Volumen des Zylinderrohrs 11 vergrößert, wodurch der Fluiddruck wieder gesenkt wird.

Sinkt die Fluidtemperatur nachfolgend wieder, so sinkt der an dem Druck des an dem Druckausgleichselement 5 anliegenden Fluids, wodurch sich das Druckausgleichselement 5 wieder ausdehnt. Durch das hierdurch wieder reduzierte effektive Volumen des Zylinderrohrs 1 wird der Fluiddruck wiederum ausgeglichen. Auf diese Weise wird durch das Druckausgleichselement 5 eine Veränderung der Charakteristik der Dämpferleistung in Folge eines Temperaturanstiegs des Fluids verhindert.

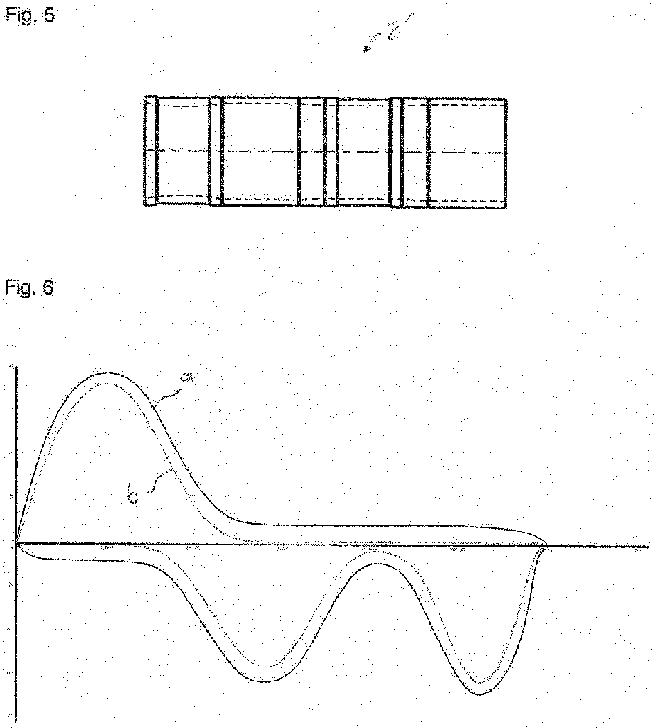

In Figur 6 ist die Charakteristik des erfindungsgemäßen Stoßdämpfers (Messkurve b) einem baugleichen Stoßdämpfer ohne Druckausgleichselement (Messkurve a) gegenübergestellt. Wie dort ersichtlich, ist die bei der Messkurve a des Stoßdämpfers ohne Druckausgleichselement durch die erhöhte Fluidtemperatur bewirkte Abweichung von der Null-Kraft-Linie bei der Messkurve b des erfindungsgemäßen Stoßdämpfers durch das Druckausgleichselement eliminiert.

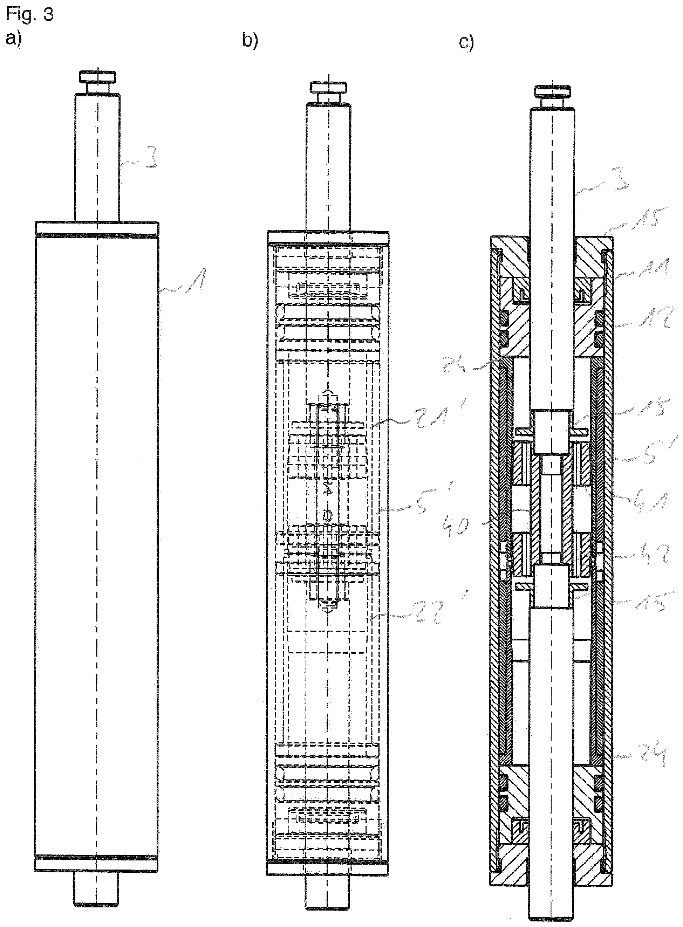

Bei dem als weiteres Ausführungsbeispiel gewählten Stoßdämpfer gemäß Figur 3 ist in dem Zylinderrohr 11 des Zylinders 1 eine Dämpferhülse 2' eingebracht, die aus zwei Dämpferhülsenteilen 21', 22' gebildet sind, die jeweils endseitig einen umlaufenden Kragen 24 aufweisen. Auf die Dämpferhülsenteile 21', 22' ist jeweils ein hohlzylindrisch ausgebildetes Druckausgleichselement 5' aufgebracht, dessen Höhe im Wesentlichen der Höhe der umlaufenden Kragen 24 entspricht. In die Stirnseiten sowie in die inneren, benachbarten Kragen 24 der aneinander liegenden Dämpferhülsenteile 21', 22' sind Aussparungen eingebracht, durch die ein Kanal gebildet ist, durch den die beiden Druckausgleichselemente 5' mit dem durch die Dämpferhülse 2' begrenzten Innenraum verbunden ist. Die beiden Druckausgleichselemente 5' sind hierdurch ständig mit Fluid beaufschlagt. Die Funktionsweise des Stoßdämpfers entspricht im Wesentlichen der Funktionsweise des zuvor beschriebenen ersten Ausführungsbeispiels.

Im Falle einer Erwärmung des in dem Zylinder 1 befindlichen Fluids, dehnt sich dieses aus, wodurch wiederum ein Anstieg des Fluiddrucks bewirkt ist. Durch den steigenden Druck des an den in dem Mantelspalt angeordneten Druckausgleichselementen 5' anliegenden Fluids werden diese komprimiert, wodurch das effektive Volumen des Zylinderrohrs 11 vergrößert wird. Hierdurch wird wiederum der Fluiddruck gesenkt. Sinkt die Fluidtemperatur nachfolgend wieder, so sinkt der Druck des an den Druckausgleichselementen 5' anliegenden Fluids, wodurch sich die Druckausgleichselement 5' wieder ausdehnen. Hierdurch wird das effektive Volumen des Zylinderrohrs 11 wieder reduziert, wodurch der Fluiddruck wieder ausgeglichen wird.

Um die Breite des die Druckausgleichselemente 5' aufnehmenden Mantelspaltes gering zu halten, kann zusätzlich auf das zwischen den beiden Kolben 41 des Kolbenmoduls 4 angeordnete Distanzstück 40 analog zu dem Ausführungsbeispiel in Figur 1 ein weiteres Druckausgleichselement 5 aufgebracht sein.

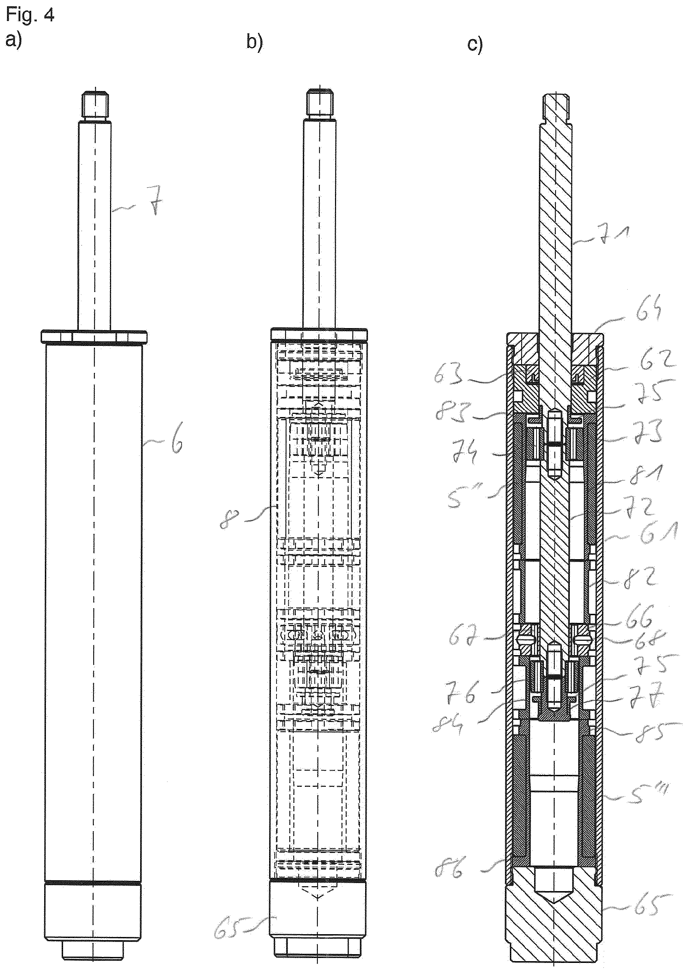

Der als drittes Ausführungsbeispiel gewählte Stoßdämpfer gemäß Figur 4 umfasst einen mit einem Fluid, vorliegend Hydrauliköl gefüllten Zylinder 6, mit einem Zylinderrohr 61, das an einem Enden mit einem Dichtungs- und Führungspaket 62 verschlossen ist, das über einen hydraulischen Dichtring 63 gegenüber einer radiale und axiale beweglichen, Kolbenstange 7 abgedichtet ist. Das Dichtungs- und Führungspakete 62 ist über ein Verschlussstück 64 axial in dem Zylinderrohr 61 fixiert. An seinem dem Verschlussstück 64 gegenüberliegenden Ende ist das Zylinderrohr 61 über einen Stopfen 65 verschlossen. Zwischen dem Verschlussstück 64 und dem Stopfen 65 ist in dem Zylinderrohr 61 als Kolbenführung ein Stützring 66 angeordnet, der mit Axialbohrungen 67 versehen ist und durch den die Kolbenstange 7 geführt ist.

Die Kolbenstange 7 ist aus einem ersten Kolbenstangenstück 71 und einem zweiten Kolbenstangenstück 72 zusammengesetzt, die miteinander verschraubt sind und zwischen denen ein erster Kolben 73 gehalten ist. Auf dem ersten Kolbenstangenstück 71 ist eine Verschlussscheibe 75 axial verschiebbar gehalten. Endseitig ist auf des zweite Kolbenstangenstück 72 ein Endstück 77 aufgeschraubt, auf dem eine weitere Verschlussscheibe 75 axial verschiebbar geführt ist. Zwischen dem zweiten Kolbenstangenstück 72 und dem Endstück 77 ist ein zweiter Kolben 76 gehalten, der im Ausführungsbeispiel einen kleineren Außendurchmesser aufweist, als der erste Kolben 73. Die beiden Kolben 73, 76 sind wiederum mit Axialbohrungen 74 versehen.

In dem Zylinderrohr 61 ist eine geteilte Dämpferhülse 8 angeordnet, die aus einem thermoplastischen Kunststoff, vorliegend Polyamid hergestellt ist und die aus vier Dämpferhülsenteilen 81, 82, 84, 85 gebildet ist, deren einzelne Innenkonturen sich zu der effektiven Innenkontur der Dämpferhülse 8 ergänzen. Zwischen dem Dichtungs- und Führungspaket 62 und dem Stützring 66 ist eine erste Dämpferhülsenanordnung positioniert, die zwei aneinander liegende Dämpferhülsenteile 81, 82 umfasst, die jeweils endseitig einen umlaufenden Kragen 83 aufweisen. Zwischen den Kragen 83 des an dem Dichtungs- und Führungspaket 62 anliegenden Dämpferhülsenteils 81 ist ein erstes, hohlzylindrisches Druckausgleichselement 5" angeordnet dessen Höhe im Wesentlichen der Höhe des Kragens 83 entspricht. Eine zweite Dämpferhülsenanordnung ist aus zwei weiteren aneinander liegenden Dämpferhülsenteilen 84, 85 gebildet und zwischen dem Stützring 66 und dem Stopfen 65 positioniert. Auch die Dämpferhülsenteile 84, 85 weisen jeweils endseitig einen umlaufenden Kragen 86 auf.

Zwischen den Kragen 86 des an dem Stopfen 65 anliegenden Dämpferhülsenteils 85 ist ein zweites, hohlzylindrisches Druckausgleichselement 5‴ angeordnet, dessen Höhe im Wesentlichen der Höhe des Kragens 86 entspricht. Die Höhe der Kragen 86 und des Druckausgleichselements 5‴ ist größer gewählt, als die Höhe der Kragen 83 und des Druckausgleichselements 5". Der Hierfür erforderliche Raum ist durch den gegenüber dem ersten Kolben 73 geringeren Außendurchmesser des zweiten Kolbens 76 gegeben. Mit Ausnahme der an dem Dichtungs- und Führungspaket 62 und dem Stopfen 65 anliegenden Kragen 83, 86 sind alle Kragen 83, 86 umlaufend mit Ausnehmungen versehen, wodurch Kanäle gebildet sind, die mit umlaufend in dem Stützring 66 eingebrachten Radialbohrungen 68 verbunden sind, die in den Axialbohrungen 67 münden. Hierdurch sind die im Ausführungsbeispiel aus Moosgummi hergestellten Druckausgleichselemente 5", 5‴ kontinuierlich mit Hydrauliköl beaufschlagt.

Die Funktionsweise dieses Stoßdämpfers, insbesondere der mit Axialbohrungen 74 versehenen Kolben 73 im Zusammenspiel mit den Verschlussscheiben 75 sowie mit der Innenkontur der Dämpferhülse 8 entspricht im Wesentlichen der Funktionsweise der zuvor beschriebenen Stoßdämpfer, mit dem Unterschied, dass die Kolbenstange nur einseitig aus dem Zylinder 6 herausgeführt ist und durch einen in dem Zylinderrohr 61 angeordneten, als Kolbenführung fungierenden Stützring 66 geführt ist.

Aus dieser Konfiguration ergibt sich bei Bewegung der Kolbenstange 7 mit den an dieser angeordneten Kolben 73, 76 eine zusätzliche, erhebliche Änderung des effektiven Volumens des Zylinderrohrs 61, was zu einen Unter- bzw. Überdruck des Fluids führt, was wiederum zu einer Behinderung bis hin zur Blockierung der Bewegung der Kolbenstange 7 führen würde. Diese zusätzliche Volumenänderung wird durch die - verglichen mit den vorherigen Ausführungsbeispielen größer dimensionierten - Druckausgleichselemente 5‴ kompensiert.

Bei einem Druckanstieg des an dem in den durch die Dämpferhülsenteile 81, 85 und dem Zylinderrohr 61 gebildeten Mantelspalten angeordneten Druckausgleichselementen 5", 5‴ anliegenden Fluids, vorliegend Hydrauliköl, durch Bewegung der Kolbenstange 7 sowie auch durch einen Anstieg der Fluidtemperatur, werden die Druckausgleichselemente 5", 5‴ komprimiert, wodurch das effektive, dem Fluid zugängliche Volumen des Zylinderrohrs 11 wiederum vergrößert wird, wodurch der Fluiddruck gesenkt wird. Bei einem Absinken des an den Druckausgleichselementen 5", 5‴ anliegenden Fluiddrucks durch eine entgegengesetzte Bewegung der Kolbenstange 7 sowie auch durch ein Absenken der Fluidtemperatur dehnen sich die Druckausgleichselementen 5", 5‴ wieder aus. Hierdurch wird das effektive Zylinderrohrvolumen wieder reduziert, wodurch der Fluiddruck wieder ausgeglichen wird.

## Patentansprüche

1. Stoßdämpfer, umfassend einen mit einem Fluid befüllten Zylinder (1, 6) und eine in diesem geführten Kolbenstange (3, 7), wobei die Kolbenstange (3) in den Zylinder (1, 6) hinein oder durch ihn hindurchgeführt ist und beabstandet zueinander mit zwei Kolben (41, 73, 76) versehen ist, in die umlaufend radial beabstandet zu der Kolbenstange (3, 7) Axialbohrungen (42, 74) eingebracht sind und an deren Außenseite jeweils eine Verschlussscheibe (43, 75) zum Verschließen der Axialbohrungen (42, 74) des zugeordneten Kolbens (41, 73, 76) auf der Kolbenstange (3, 7) axial beweglich gelagert ist, wobei die die Kolben (41, 73, 76) umfassende Zylinderinnenwand zumindest bereichsweise einen sich in Axialrichtung stetig ändernden Durchmesser aufweist, wobei in dem Zylinder (1, 6) wenigstens ein Druckausgleichselement (5, 5', 5", 5‴) angeordnet ist, das ein druckabhängiges variables Volumen aufweist und das mit dem Fluid in Kontakt ist, **dadurch gekennzeichnet, dass** das wenigstens eine Druckausgleichselement (5, 5', 5", 5‴) aus Elastomerschaum, Moosgummi oder Zellkautschuk hergestellt ist, wobei die Zylinderinnenwand durch die Innenmantelfläche wenigstens einer in den Zylinder (1, 6) eingebrachten Dämpferhülse (2, 8) gebildet ist, deren Außendurchmesser geringer ist, als der Innendurchmesser des Zylinders (1, 6), wobei in dem zwischen dem Zylinder (1, 6) und der wenigstens einen Dämpferhülse (2, 8) gebildeten Mantelspalt wenigstens ein Druckausgleichselement (5', 5", 5‴) angeordnet ist und wobei der Mantelspalt über wenigstens eine Durchlassöffnung mit dem Fluid beaufschlagbar ist.

2. Stoßdämpfer nach Anspruch 1, **dadurch gekennzeichnet, dass** ein Druckausgleichselement (5) zwischen den beiden Kolben (41) die Kolbenstange (3) zumindest bereichsweise umgebend angeordnet ist.

3. Stoßdämpfer nach Anspruch 2, **dadurch gekennzeichnet, dass** zwischen den Kolben (41) zumindest zwei beabstandet zueinander angeordnete radiale auskragende Stützelemente (44) vorhanden sind, zwischen denen wenigstens ein Druckausgleichselement (5) gehalten ist.

4. Stoßdämpfer nach einem der vorgenannten Ansprüche, **dadurch gekennzeichnet, dass** der Zylinder (6) an einem Ende geschlossen ausgebildet ist, wobei die Kolbenstange (7) an dem anderen Ende aus diesem herausragt und wobei zwischen den beiden Kolben (73, 76) eine Kolbenführung (66) angeordnet ist, die wenigstens eine Druckausgleichsöffnung (67) aufweist.

5. Stoßdämpfer nach Anspruch 4, **dadurch gekennzeichnet, dass** in dem Zylinder (6) jeweils auf einer Seite der Kolbenführung (66) wenigstens eine die Zylinderinnenwand ausbildende Dämpferhülse (81, 85) angeordnet ist, durch die jeweils ein Mantelspalt gebildet ist, in dem ein Druckausgleichselement (5", 5‴) angeordnet ist.

6. Stoßdämpfer nach Anspruch 5, **dadurch gekennzeichnet, dass** die beiden durch die beiden Dämpferhülsen (81, 85) gebildeten Mantelspalte unterschiedlich breit ausgebildet sind, wobei bevorzugt der dem geschlossenen Ende des Zylinders (6) zugewandte zweite Spalt breiter ausgebildet ist, als der dem offenen Ende des Zylinders (6) zugewandte erste Spalt.

7. Stoßdämpfer nach einem der vorgenannten Ansprüche, **dadurch gekennzeichnet, dass** die Größe des Druckausgleichselements (5", 5‴) im Wesentlichen der Größe des Spaltes entspricht.

8. Stoßdämpfer nach einem der vorgenannten Ansprüche, **dadurch gekennzeichnet, dass** wenigstens eine Dämpferhülse (2, 8) aus wenigstens zwei hintereinander angeordnete Dämpferteilhülsen (21, 22, 23, 81, 82, 84, 85) gebildet ist, die eine zueinander unterschiedliche Innenkontur aufweisen.

9. Stoßdämpfer nach einem der vorgenannten Ansprüche, **dadurch gekennzeichnet, dass** die Kolbenstange (3, 7) mehrteilig ausgebildet ist.

10. Stoßdämpfer nach einem der vorgenannten Ansprüche, **dadurch gekennzeichnet, dass** die Zylinderinnenwand in einem ersten Bereich einen in Axialrichtung sich konisch erweiternden und in einem sich anschließenden zweiten Bereich einen sich konisch verjüngenden Bereich aufweist.

11. Stoßdämpfer nach einem der vorgenannten Ansprüche, **dadurch gekennzeichnet, dass** die Dämpferhülse (2, 8) aus Kunststoff, vorzugsweise aus einem thermoplastischen Kunststoff, insbesondere aus Polycarbonat oder Polyamid hergestellt ist.

12. Stoßdämpfer nach einem der vorgenannten Ansprüche, **dadurch gekennzeichnet, dass** die beiden Kolben (41, 73, 76) auf ihrer der jeweiligen Verschlussscheibe (43, 75) zugewandten Außenseite einen axial sich konisch verjüngenden Abschnitt aufweisen.

## Claims

1. Shock absorber, comprising a fluid-filled cylinder (1, 6) and a piston rod (3, 7) guided in it, where the piston rod (3) is inserted into or guided through the cylinder (1, 6) and applied with two pistons (41, 73, 76) at a distance from each other into which axial bores (42, 74) are applied circumferentially at a radial distance from the piston rod (3, 7), on the outside of each of which a closure disc (43, 75) is placed on the piston rod (3, 7) in an axially movable fashion to close the axial bores (42, 74) of the assigned piston (41, 73, 76), where the inner wall of the cylinder that comprises the pistons (41, 73, 76) has a diameter that is continually changing in the axial direction at least in some areas, where at least one pressure relief element (5, 5', 5", 5‴) is arranged in the cylinder (1, 6) that has a pressure-dependent variable volume and that is in contact with the fluid, **characterised in that** the at least one pressure relief element (5, 5', 5", 5‴) is made of elastomer foam, sponge rubber, or cellular rubber, where the inner wall of the cylinder is formed by the inner lateral surface of at least one damping sleeve (2, 8) inserted into the cylinder (1, 6), the outer diameter of which is less than the inner diameter of the cylinder (1, 6), where at least one pressure relief element (5', 5", 5‴) is arranged in the jacket gap formed between the cylinder (1, 6) and the at least one damping sleeve (2, 8), and where the jacket gap can be pressurised with the fluid through at least one penetration opening.

2. Shock absorber in accordance with claim 1, **characterised in that** a pressure relief element (5) is arranged between the two pistons (41), surrounding the piston rod (3) at least in some areas.

3. Shock absorber in accordance with claim 2, **characterised in that** at least two radially projecting support elements (44) arranged at a distance from each other are present between the pistons (41), between which at least one pressure relief element (5) is held.

4. Shock absorber in accordance with any one of the preceding claims, **characterised in that** the cylinder (6) is formed closed on one end, with the piston rod (7) projecting from it at the other end and with a piston guide (66) that has at least one pressure relief opening (67) being arranged between the two pistons (73, 76).

5. Shock absorber in accordance with claim 4, **characterised in that** at least one damping sleeve (81, 85) that forms the inner wall of the cylinder is arranged in the cylinder (6) on one side of the piston guide (66) each, through which a jacket gap each is formed in which a pressure relief element (5", 5‴) is arranged.

6. Shock absorber in accordance with claim 5, **characterised in that** the two jacket gaps formed by the two damping sleeves (81, 85) are formed differently wide, where the second gap that is facing the closed end of the cylinder (6) is preferably formed wider than the first gap that is facing the open end of the cylinder (6).

7. Shock absorber in accordance with any one of the preceding claims, **characterised in that** the size of the pressure relief element (5", 5‴) essentially corresponds to the size of the gap.

8. Shock absorber in accordance with any one of the preceding claims, **characterised in that** at least one damping sleeve (2, 8) is formed of at least two partial damping sleeves (21, 22, 23, 81, 82, 84, 85) that are arranged one after the other and the inner contour of which differs from each other.

9. Shock absorber in accordance with any one of the preceding claims, **characterised in that** the piston rod (3, 7) is formed in multiple parts.

10. Shock absorber in accordance with any one of the preceding claims, **characterised in that** the inner wall of the cylinder has an area that is conically widening in the axial direction in a first area and one that is conically narrowing in a subsequent second area.

11. Shock absorber in accordance with any one of the preceding claims, **characterised in that** the damping sleeve (2, 8) is made of plastic, preferably of a thermoplastic, in particular of polycarbonate or polyamide.

12. Shock absorber in accordance with any one of the preceding claims, **characterised in that** the two pistons (41, 73, 76) have a section that is conically narrowing in the axial direction on their respective outer side that faces the closure disc (43, 75).

## Revendications

1. Amortisseur, comprenant un cylindre (1,6) rempli d'un fluide, dans lequel une tige de piston (3,7) est guidée, sachant que la tige de piston (3) est guidée dans le cylindre (1,6) ou à travers ce dernier et dotée de deux pistons (41, 73, 76) situés à distance l'un de l'autre, sur le pourtour desquels des orifices axiaux (42, 74) sont réalisés radialement écartés de la tige de piston (3, 7) et sur la face extérieure de chacun desquels un disque de fermeture (43, 75) est logé de manière à être mobile axialement sur la tige de piston correspondante (3, 7) pour fermer les alésages axiaux (42, 74) du piston correspondant (41, 73, 76), sachant que la paroi intérieure du cylindre qui entoure les pistons (41, 73, 76) présente au moins par endroits un diamètre qui change continuellement en direction axiale, sachant que dans le cylindre (1, 6), au moins un élément de compensation de pression (5, 5', 5", 5"') est disposé, lequel présente un volume variable en fonction de la pression et est en contact avec le fluide, **caractérisé en ce qu'**au moins un élément de compensation de pression (5, 5', 5", 5"') est fabriqué en mousse d'élastomère, en caoutchouc mousse ou en caoutchouc cellulaire, sachant que la paroi intérieure du cylindre est formée par la surface interne d'au moins une douille d'amortisseur (2, 8) introduite dans le cylindre (1, 6) et dont le diamètre extérieur est inférieur au diamètre intérieur du cylindre (1, 6), sachant que dans la fente d'enveloppe formée entre le cylindre (1, 6) et au moins une douille d'amortisseur (2, 8), au moins un élément de compensation de pression (5', 5", 5"') est disposé et que la fente d'enveloppe peut être alimentée en fluide via au moins un orifice de passage.

2. Amortisseur selon la revendication 1, **caractérisé en ce qu'**un élément de compensation de pression (5) entourant au moins par endroits la tige de piston (3) est disposé entre les deux pistons (41).

3. Amortisseur selon la revendication 2, **caractérisé en ce qu'**entre les pistons (41) il y a au moins deux éléments de support (44) radiaux en saillie disposés à distance l'un de l'autre entre lesquels au moins un élément de compensation de pression (5) est maintenu.

4. Amortisseur selon l'une des revendications précédentes, **caractérisé en ce que** le cylindre (6) est réalisé sans ouverture à une extrémité, sachant que la tige de piston (7) en dépasse à l'autre extrémité et qu'un guidage de piston (66) présentant au moins un orifice de compensation de pression (67) est disposé entre les deux pistons (73, 76).

5. Amortisseur selon la revendication 4, **caractérisé en ce que** dans le cylindre (6), au moins une douille d'amortisseur (81,85) formant la paroi intérieure du cylindre est disposée de chaque côté du guidage de piston (66) et forme respectivement une fente d'enveloppe dans laquelle un élément de compensation de pression (5", 5‴) est disposé.

6. Amortisseur selon la revendication 5, **caractérisé en ce que** les deux fentes d'enveloppe formées par les deux douilles d'amortisseurs (81, 85) ont des largeurs différentes, sachant que, de préférence, la deuxième fente, qui est tournée vers l'extrémité fermée du cylindre (6), est plus large que la première fente, qui est tournée vers l'extrémité ouverte du cylindre (6).

7. Amortisseur selon l'une des revendications précédentes, **caractérisé en ce que** la taille de l'élément de compensation de pression (5", 5"') correspond pour l'essentiel à la taille de la fente.

8. Amortisseur selon l'une des revendications précédentes, **caractérisé en ce qu'**au moins une douille d'amortisseur (2, 8) est formée par au moins deux éléments de douille d'amortisseur (21, 22, 23, 81, 82, 84, 85) disposés l'un derrière l'autre, qui présentent un contour intérieur différent.

9. Amortisseur selon l'une des revendications précédentes, **caractérisé en ce que** la tige de piston (3, 7) est constituée de plusieurs éléments.

10. Amortisseur selon l'une des revendications précédentes, **caractérisé en ce que** la paroi intérieure du cylindre présente une première zone qui s'élargit de manière conique en direction axiale, suivie d'une deuxième zone qui se rétrécit de manière conique.

11. Amortisseur selon l'une des revendications précédentes, **caractérisé en ce que** la douille d'amortisseur (2, 8) est fabriquée en plastique, de préférence en thermoplastique, notamment en polycarbonate ou en polyamide.

12. Amortisseur selon l'une des revendications précédentes, **caractérisé en ce que** les deux pistons (41, 73, 76) présentent sur leur face extérieure tournée vers le disque de fermeture respectif (43, 75) une section qui se rétrécit axialement de manière conique.
